# EUROPEAN PATENT APPLICATION

(11) **EP 4 398 353 A2**
(43) Date of publication of application: **10.07.2024**
(21) Application number: 23217879.8
(22) Date of filing: 19.12.2023
(51) Int. Cl.: H01M 8/2432, H01M 8/248

(54) **SAFELY TRANSPORTABLE SOLID OXIDE STACK ASSEMBLY**

(30) Priority: 30.12.2022 KR 20220190282
(71) Applicant: Korea Institute of Energy Research, Daejeon 34129 (KR)
(72) Inventor: Kim, Sun-dong, 30126 Sejong-si (KR); Kim, Se-young, 30126 Sejong-si (KR); Kim, Tae-Woo, 34023 Daejeon (KR); Choi, Yoonseok, 30127 Sejong-si (KR); Park, Sang sin, 34130 Daejeon (KR)
(74) Representative: Sander, Rolf

(57) **Abstract**

Disclosed is a solid oxide stack assembly that is safely transportable. The solid oxide stack assembly that is safely transportable according to the present invention includes: a stack formed by repeatedly stacking a unit in which a unit cell and a predetermined laminate are coupled to each other; an upper plate and a lower plate arranged to support a top surface and a bottom surface of the stack, respectively; a plurality of guide bars arranged at equal distances along an edge of the upper plate and coupled to the lower plate while passing through the upper plate and the stack to guide alignment and assembly of the stack; a plurality of compressing springs each having one end supported by the upper plate in a state in which a protrusion of the guide bar protruding from the upper plate passes through the compression spring; and a pressing part that is screw-coupled to the protrusion to press the other end of the compression spring, thereby constantly compressing the stack and maintaining the alignment of the stack. According to the present invention, as the stack may be safely transported to an installation site although the stack is assembled in advance at a fuel cell or electrolyzer cell manufacturing factory, an output degradation of the fuel cell or the electrolyzer cell caused by misalignment of the stack may be prevented, and installation and preprocessing of the fuel cell or the electrolyzer cell may be quickly performed at the installation site.

## Description

### BACKGROUND

The present invention relates to a solid oxide stack assembly that is safely transportable, and more particularly, to a solid oxide stack assembly capable of safely transporting a large-scale stack to an installation site and being quickly fixed and operated at the installation site.

As existing fossil fuels such as oil and coal are depleted, energy sources for replacing the fossil fuels are required. Among the energy sources, a solid oxide fuel cell, and a fuel cell and an electrolyzer cell, which are based on the solid oxide fuel cell, are spotlighted in terms of being environmentally friendly without emitting pollutants, having a high energy efficiency, and using a fuel source that is abundant in nature.

In general, a unit cell has a structure in which a cathode (negative electrode) of an air electrode and an anode (positive electrode) of a fuel electrode are stacked on both side surfaces of an electrolyte, respectively, and a fuel such as hydrogen and oxygen are supplied to the fuel electrode and the air electrode, respectively.

Here, the supplied fuel releases electrons to an external circuit due to oxidation, and the supplied oxygen generates a predetermined amount of electricity in a process of receiving electrons from the external circuit and being reduced to oxygen ions and then moved to the fuel electrode through the electrolyte to react with the oxidized fuel, thereby producing water.

The unit cell has various types such as molten carbonate fuel cell (MCFC), phosphoric acid fuel cell (PAFC), and polymer electrolyte fuel cell (PEFC). Among the unit cells, a solid oxide unit cell is being actively researched because the solid oxide unit cell that uses stabilized zirconia and operates at high temperatures of about 600°C to 850 °C, has a highest efficiency, produces low pollution, and does not require electrolyte supplement due to no electrolyte loss.

However, the solid oxide unit cell is used in the form of a stack in which a plurality of solid oxide unit cells are stacked and connected with a current collector, a cell frame, a sealing material, and a separator to form a high-output solid oxide fuel cell or electrolyzer cell instead of being used as a single cell structure.

In particular, although the solid oxide fuel cell is differently manufactured according to a size or scale of the stack, the solid oxide fuel cell is manufactured through an essential process such as an assembly process of several tens to several hundreds of stacks because several tens of fuel cells are input based on 1 kw and a preprocessing process (sealing material fusion) that prevents leakage of oxygen or a fuel from the inside of the stack by heating and pressing the sealing material disposed in the assembled stack.

Here, since the solid oxide fuel cell or electrolyzer cell including a stack having a small stack scale has a short length of the stack, the stack alignment or the fused sealing material may not be damaged by a vibration or an impact during transportation although the stack is manufactured in advance as a finished product through the assembly process and the preprocessing process in a manufacturing factory and then transported to an installation site.

However, in case of the solid oxide fuel cell or the electrolyzer cell including a stack having a large stack scale, which is disclosed in Korean Patent Registration No. 10-1826821 (registration date: February 01, 2018), the stack alignment or the fused sealing material may be damaged by a vibration or an impact while being transported to an installation site after manufactured in advance as a final product in a manufacturing factory because the stack having a great length is vulnerable to an external impact.

As described above, the solid oxide fuel cell or electrolyzer cell in which the stack alignment is misaligned or the fused sealing material is damaged due to transportation may not produce power or hydrogen as designed and also cause a safety accident. Thus, the assembly process and the preprocessing process for the solid oxide fuel cell or the electrolyzer cell including the stack having the large stack scale are sequentially performed in the installation site after components of the stack are transported to the installation site instead of being manufactured in the manufacturing factory.

Since the stack assembly process and the preprocessing process performed at the installation site are mostly performed manually by a worker instead of being accurately and precisely performed by using prepared equipment at the manufacturing factory, problems below frequently occur.

First, in the stack assembly process, alignment of the stack may not be consistent depending on a level of the worker, and the assembly process may be performed in a state in which pressure applied to the entire stack is not uniform when a high load is not uniformly applied to the entire stack according to conditions of the installation site.

Also, in the stack preprocessing process (sealing material fusion), when the assembled stack is heated under ununiform pressure to fuse the sealing material, a sealing force of the stack may be reduced.

Furthermore, since a process of stacking a plurality of stacks and sealing materials one by one in order and connecting a channel for supplying a fuel and oxygen is manually performed by the worker instead of being performed quickly by the equipment of the manufacturing factor, a time and cost for installing the solid oxide fuel cell or the electrolyzer cell may increase.

The above-described stack assembly under the ununiform pressure and reduction in sealing force of the stack may reduce the output of the solid oxide fuel cell or the electrolyzer cell and cause breakage or damage. Thus, researches and developments on various measures for compensating or improving the above-described limitations and for performing quick site installation are required.

### [PRIOR ART DOCUMENTS]

### [PATENT DOCUMENTS]

(Patent document 1) Korean Patent Registration No. 10-1826821 (registration data: February 01, 2018)

### SUMMARY

The present invention provides a solid oxide stack assembly or an electrolyzer cell that is safely transported to an installation site without damage to a stack although assembled at a fuel cell or electrolyzer cell manufacturing factory in advance, and installation and preprocessing of the fuel cell and the electrolyzer cell may be quickly performed at the installation site.

An embodiment of the present invention provides a solid oxide stack assembly that is safely transportable, the solid oxide stack assembly including: a stack formed by repeatedly stacking a unit in which a unit cell and a predetermined laminate are coupled to each other; an upper plate and a lower plate arranged to support a top surface and a bottom surface of the stack, respectively; a plurality of guide bars arranged at equal distances along an edge of the upper plate and coupled to the lower plate while passing through the upper plate and the stack to guide alignment and assembly of the stack; a plurality of compressing springs each having one end supported by the upper plate in a state in which a protrusion of the guide bar protruding from the upper plate passes through the compression spring; and a pressing part that is screw-coupled to the protrusion to press the other end of the compression spring, thereby constantly compressing the stack and maintaining the alignment of the stack.

In an embodiment, the solid oxide stack assembly may further include a transportation ring part coupled to the upper plate for movement or transportation and detachably coupled to a heavy object moving unit.

In an embodiment, the solid oxide stack assembly may further include a plurality of plate-shaped pressure sensors, each of which is disposed at a central portion of the guide bar adjacent thereto while being in contact with a bottom surface of the upper plate and a top surface of the stack to measure a compression force applied from the upper plate to the stack.

In an embodiment, the pressing part may include an accommodation groove recessed inwardly to surround and accommodate an outer circumferential surface of the other end of the compression spring so that the other end of the compression spring is firmly supported and constantly pressed.

In an embodiment, the upper plate may include a support groove recessed inwardly to surround and accommodate an outer circumferential surface of the one end of the compression spring so that the one end of the compression spring is firmly supported and constantly pressed.

In an embodiment of the present invention, a method for manufacturing the solid oxide stack assembly includes: arranging a lower plate on a work surface, and coupling a plurality of guide bars at equal distances along an edge of the lower plate; forming a stack by repeatedly stacking a unit through which the guide bar passes and which is aligned by the guide bar; arranging the upper plate through which the guide bar passes to support a top surface of the stack, and installing a compression spring so that one end of the upper plate is supported in a state in which a protrusion of the guide bar protruding from the upper plate passes through the compression spring; and screw-coupling the pressing part to the protrusion so as to press the other end of the compression spring, thereby constantly compressing the stack and maintaining the alignment of the stack.

In an embodiment of the present invention, a method for seating and fixing the solid oxide stack assembly at an installation site includes: seating the solid oxide stack assembly at the installation site by using a heavy object moving unit; positioning a pressing jig that is a heavy object to an upper plate of the solid oxide stack assembly seated at the installation site by using the moving unit; separating the pressing part of the solid oxide stack assembly and removing the compression spring and guide bar while a pressing force of the pressing jig is applied; and compressing and fixing the stack by coupling a fixing bar that passes through the upper plate and the stack to the lower plate, and removing the pressing jig.

### BRIEF DESCRIPTION OF THE FIGURES

The accompanying drawings are included to provide a further understanding of the inventive concept, and are incorporated in and constitute a part of this specification. The drawings illustrate exemplary embodiments of the inventive concept and, together with the description, serve to explain principles of the inventive concept. In the drawings:
FIG. 1 is a perspective view illustrating a safely transportable solid oxide stack assembly according to an embodiment of the present invention;
FIG. 2 is an exploded view of FIG. 1;
FIG. 3 is a cross-sectional view taken along line A-A of FIG. 1;
FIG. 4 is a process view illustrating each process of a method for manufacturing the safely transportable solid oxide stack assembly according to an embodiment of the present invention; and
FIGS. 5 and 6 are process views illustrating each process of a method for seating and fixing the safely transportable solid oxide stack assembly according to an embodiment of the present invention.

### DETAILED DESCRIPTION

Hereinafter, embodiments of the present invention will be described in detail with reference to the accompanying drawings. However, in descriptions of the present invention, descriptions related to well-known functions or configurations will be ruled out in order not to unnecessarily obscure subject matters of the present invention.

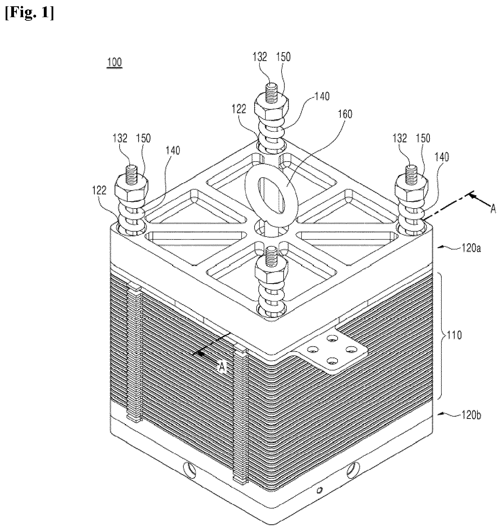

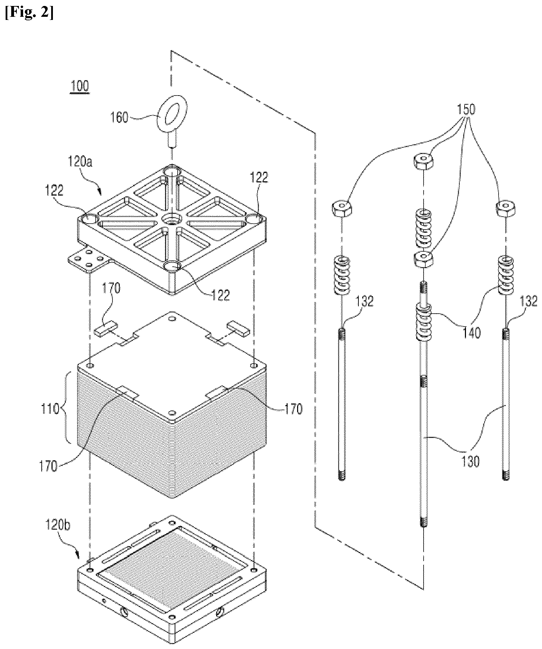

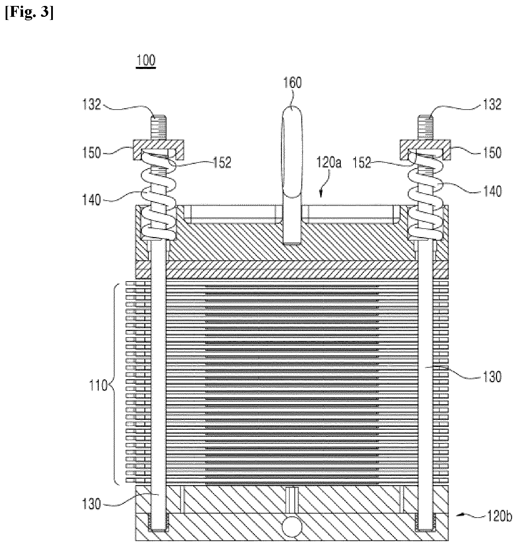

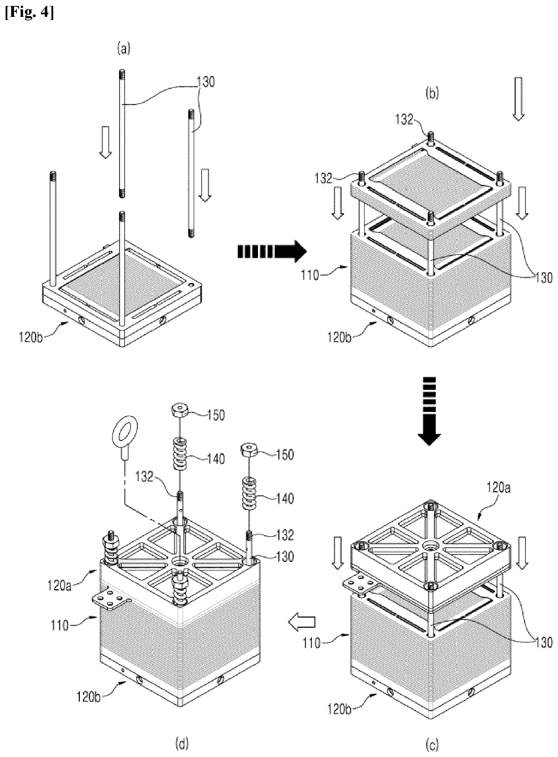

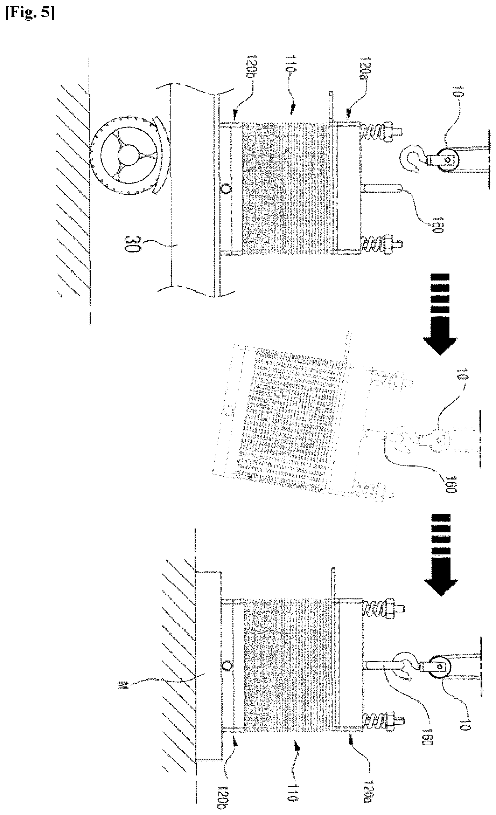

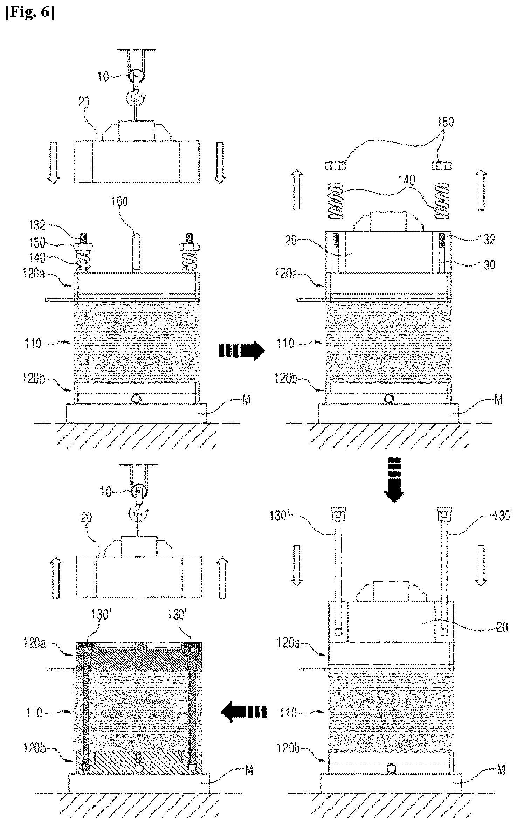

FIG. 1 is a perspective view illustrating a safely transportable solid oxide stack assembly according to an embodiment of the present invention, FIG. 2 is an exploded view of FIG. 1, FIG. 3 is a cross-sectional view taken along line A-A of FIG. 1, FIG. 4 is a process view illustrating each process of a method for manufacturing the safely transportable solid oxide stack assembly according to an embodiment of the present invention, and FIGS. 5 and 6 are process views illustrating each process of a method for seating and fixing the safely transportable solid oxide stack assembly according to an embodiment of the present invention.

Spatially relative terms, such as "below", "lower", "above", "upper" and the like, may be used herein for ease of description to describe an element and/or a feature's relationship to another element(s) and/or feature(s) as illustrated in the figures. Unless otherwise defined, the three axes may rotate in correspondence to each other and be converted into each other.

A safely transportable solid oxide stack assembly 100 according to the present invention may be applied not only to a fuel cell but also to an electrolyzer cell with the same or similar structure.

The solid oxide stack assembly 100 according to the present invention may be safely transported to an installation site M without damage to a stack 110 although assembled at a manufacturing factory in advance, and installation and preprocessing of the fuel cell and the electrolyzer cell may be quickly performed at the installation site M.

As illustrated in FIGS. 1 to 3, the solid oxide stack assembly 100 according to an embodiment of the present invention may include a stack 110, an upper plate 120a, a lower plate 120b, a guide bar 130, a compression spring 140, a pressing part 150, a ring part 160, and a pressure sensor 170 in order to specifically implement the above-described functions and operations.

Hereinafter, each of the above-described components will be described in detail.

First, the stack 110 is a component formed by repeatedly stacking a unit (not shown) in which laminates such as a current collector, a cell frame, a sealant, and a separator are coupled to each other based on a unit cell.

Here, the unit cell may be formed such that a dense electrolyte is disposed at a central portion, and a cathode that is a porous air electrode and an anode that is a fuel electrode are attached to both surfaces of the electrolyte, respectively.

Here, the electrolyte may include one of stabilized zirconia-based, ceria-based, and lanthanum gallate-based solid electrolytes. The above-described dense electrolyte having airtightness may operate at a high temperature of about 600°C to 850°C.

The current collector is a component disposed on at least one of an outer side surface of the air electrode and an outer side surface of the fuel electrode of the unit cell to collect electricity of the unit cell.

The cell frame may include an interconnector made of a material such as metal, ceramic, and glass and disposed on both surfaces of the unit cell, a window frame disposed on the side surface of the unit cell, and a spacer disposed between the interconnector, the window frame, and the unit cell to maintain a constant gap therebetween. Here, the spacer may include at least one of mica, ceramic, silicon, and rubber.

The sealing material that is a component disposed between the unit cell and the cell frame to seal the entire unit cell has a predetermined viscosity and seals a portion between different members when the stack 110 is heated to a sealing temperature, i.e., a temperature at which the sealing material is melted during the preprocessing.

The stack 110 that is formed by stacking at least one unit in which the above-described components are coupled may be disposed between the upper plate 120a and the lower plate 120b that will be described later.

The upper plate 120a and the lower plate 120b are plate-shaped components arranged to support top and bottom surfaces of the stack 110, respectively. A predetermined flow path through which a fuel and oxygen flowing through the above-described stack 110 are supplied and discharged may be formed in each of the upper plate 120a and the lower plate 120b.

The plate-shaped upper and lower plates 120a and 120b each having an area greater than that of the stack 110 may be made of Inconel metal that is not deformed even under an operating environment of 600°C to 850°C.

Here, as illustrated in FIGS. 1 and 2, when each of the upper plate 120a and the lower plate 120b has a rectangular shape, the stack 110 may have the same shape as and an area less than each of the upper plate 120a and the lower plate 120b. Also, each of the upper plate 120a and the lower plate 120b may have a shape different from that of the stack 110.

As illustrated in FIG. 3, the upper plate 120a according to an embodiment of the present invention may include a support groove 122 recessed inwardly to surround and accommodate an outer circumferential surface of one end of the compression spring 140 that will be described later.

Since the one end of the compression spring 140 is constantly pressed by the support groove 122 while being firmly supported by the upper plate 120a instead of being deviated from a direction in which the stack 110 is stacked, i.e., a vertical direction, the compression spring 140 fully exerts own elastic force.

The guide bar 130 is a bar-shaped component coupled to the lower plate 120b in a state of passing through the upper plate 120a and the stack 110 to guide alignment and assembly of the stack 110. A plurality of guide bars 130 may be arranged at equal distances along an edge of the upper plate 120a.

This guide bar 130 may protrude sufficiently upward from the upper plate 120a and pass through the compression spring 140 that will be described later in a state of passing through the upper plate 120a and the stack 110 and being screw-coupled to the lower plate 120b and then be manufactured into a length capable of being screw-coupled with the pressing part 150.

The compression spring 140 is a component that stores the elastic force of the coil-shaped material when both ends are compressed to provide an elastic restoring force in a tensile direction. The compression spring 140 is disposed in a state in which a protrusion 132 of the guide bar 130 protruding from the upper plate 120a passes a central portion thereof to provide the elastic restoring force in a direction of compressing the stack 110 toward the lower plate 120b.

Specifically, the compression spring 140 according to an embodiment of the present invention has one end supported by the upper plate 120a, i.e., the support groove 122, in a state in which the protrusion 132 passes through the central portion and the other end supported and pressed by the pressing part 150, i.e., an accommodation groove 152 to perform an action of compressing the upper plate 120a and the stack 110 toward the lower plate 120b.

Also, the compression spring 140 installed at the above-described position provide the elastic restoring force to maintain alignment of the stack 110 against a vibration or impact applied in a horizontal direction of the stack 110 in addition to the action of compressing the stack 110 in the vertical direction.

On the other hand, the both ends of the compression spring 140 may be ground into a closed end shape so as to be in close contact with the support groove 122 and the accommodation groove 152, which are respective support surfaces.

Since this grinding process allows the compression spring 140 to be more firmly supported by the support groove 122 and the accommodation groove 152, the compression spring 140 may fully use the own elastic force to compress the stack 110.

The pressing part 150 is a component for constantly compressing the stack 110 through the above-described interaction with the compression spring 140 and maintain the alignment of the stack 110.

As illustrated in FIG. 3, the pressing part 150 according to an embodiment of the present invention may have a structure of being screw-coupled to the protrusion 132 that is an exposed end of the guide bar 130 to press the other end of the compression spring 140.

Also, the pressing part 150 may include an accommodation groove 152 recessed inwardly to accommodate and surround an outer circumferential surface of the other end of the compression spring 140.

Since this accommodation groove 152 allows the other end of the compression spring 140 to be constantly pressed in a direction in which the stack 110 is stacked, i.e., the vertical direction, in a state of being firmly supported by the pressing part 150 instead of being deviated, the own elastic force of the compression spring 140 may be fully stored as the elastic restoring force without loss.

The above-described pressing part 150 may vertically move through screw-coupling to the protrusion 132 of the guide bar 130 and freely adjust a degree of pressing of the compression spring 140 to increase or decrease a degree of compressing the stack 110.

Here, the degree of compressing the stack 110 may be determined at a level of deriving an optimum output of the fuel cell or the electrolyzer cell that is designed in consideration of the number of stacked units (not shown) in which the unit cells, the current collector, the cell frame, the sealants, and the separator are coupled to each other, and a physical property of each stack.

As described above, the solid oxide stack assembly 100 according to the present invention may firmly maintain the alignment of the stack 110 based on the elastic force even during movement or transportation during which the stack 110 is assembled in advance in a fuel cell or electrolyzer cell manufacturing factory and then disposed under an external impact environment, so as to prevent output degradation of the fuel cell or the electrolyzer cell caused by misalignment of the stack 110 and quickly perform the installation and preprocessing of the fuel cell or the electrolyzer cell at the installation site M.

The transportation ring part 160 is a component that is coupled to the upper plate 120a for movement or transportation and detachably coupled to the heavy object moving unit. As illustrated in FIG. 2, a ring-shaped hook ring may be formed at an upper end, and a coupling end coupled to the upper plate 120a may extend downward from the hook ring.

The pressure sensor 170 is a component provided to detect whether a uniform compression force is applied from the upper plate 120a to a front surface of the stack 110. The pressure sensor 170 may include all sorts of commercially available sensor devices capable of measuring a compression force acting between the plate-shaped upper plate 120a and a contact surface of the stack 110 without any particular restrictions on an operating method thereof.

As illustrated in FIG. 2, the pressure sensor 170 according to an embodiment of the present invention may be provided in plurality to be disposed on a central portion of the guide bar 130 adjacent thereto while being in contact with a bottom surface of the upper plate 120a and a top surface of the stack 110.

As the pressure sensors 170 are arranged at equal distances along the edge between the upper plate 120a and the stack 110, a degree of pressure applied to the stack 110 may be measured in real time for each position of the pressure sensor 170, and an operator may accurately uniformize the degree of compression applied to the front surface of the stack 110 by individually adjusting a rotation of each of the plurality of pressing parts 150 screw-coupled to the protrusion 132.

The above-described solid oxide stack assembly 100 according to the present invention may be manufactured through a series of processes as illustrated in FIG. 4, which will be described below with reference to the drawing.

First, as illustrated in (a) of FIG. 4, a worker of a manufacturing factory performs an operation of arranging lower plates 120b consecutively provided by equipment onto a work surface and coupling a plurality of guide bars 130 at equal distances along an edge of the lower plate 120b.

Here, the guide bar 130 may be firmly fixed to the lower plate 120b by a detachable screw-coupling.

Thereafter, as illustrated in (b) of FIG. 4, the worker of the manufacturing factory repeatedly performs an operation of gripping units consecutively provided by the equipment and assembling the units so that the guide bars 130 firmly coupled to the lower plate 120b pass through the units.

Here, as the units that are naturally guided and assembled by the guide bars 130 are repeatedly stacked, the stack 110 may have a structure in and accurately aligned state.

Thereafter, as illustrated in (c) of FIG. 4, the worker of the manufacturing factory performs an operation of gripping the upper plate 120a provided by the equipment and assembling the upper plate 120a so that the guide bars 130 pass through the upper plate 120a. Accordingly, the top surface of the stack 110 may be firmly supported by the upper plate 120a.

Thereafter, as illustrated in (d) of FIG. 4, the worker of the manufacturing factory performs an operation of installing a protrusion 132 of the guide bar 130 protruding from the upper plate 120a passes through a compression spring 140. Accordingly, one end of the compression spring 140 may be seated and supported by the upper plate 120a, specifically, a support groove 122.

Finally, as illustrated in (d) of FIG. 4, the worker of the manufacturing factory performs an operation of screw-coupling a pressing part 150 to each of a plurality of protrusions 132 with a constant force.

Accordingly, as the other end of the compression spring 140 seated in the support groove 122 is pressed, the stack 110 may be compressed based on an elastic force, and alignment of the stack 110 may be maintained even under an external impact or vibration.

The solid oxide stack assembly 100 according to the present invention manufactured through the above-described series of processes may be seated and fixed at an installation site M through a series of processes illustrated in FIGS. 5 and 6, which will be described below with reference to the drawings.

First, as illustrated in FIG. 5, the worker at the installation site M performs an operation of seating the solid oxide stack assembly 100 of the present invention manufactured at the manufacturing factory by using a heavy object moving unit 10 onto the installation site M.

Here, the heavy object moving unit 10 represents a mechanical device that moves an heavy object in upward, downward, left, and right directions at a predetermined place such as a fixed or moving hoist or crane disposed at the installation site M.

Here, the worker at the installation site M performs an operation of fastening a connection ring of the moving unit 10 to the above-described ring part 160, unloading the solid oxide stack assembly 100 of the present invention from a transportation vehicle 30, and then arranging the solid oxide stack assembly 100 at the preset installation site M.

Thereafter, as illustrated in (a) of FIG. 6, the worker at the installation site M performs an operation of positioning a pressing jig 20 that is a heavy object to the upper plate 120a of the solid oxide stack assembly 100 seated on the installation site M by using the above-described moving unit10.

Here, the pressing jig 20 that is the heavy object is a weight having a weight corresponding to a compression force applied to a front surface of the stack 110 by a rotation adjustment of the pressing part 150 and the compression spring 140. The pressing jig 20 may be individually manufactured with various weights according to the kinds of the stack 110, and a final weight of the pressing jig 20 may be adjusted by attaching and detaching an additional heavy object.

Thereafter, as illustrated in (b) of FIG. 6, the worker at the installation site M performs an operation of separating the pressing part 150 of the solid oxide stack assembly 100 while the pressing force caused by the pressing jig 20 is applied and removing the compression spring 140 and guide bar 130.

Here, the separating of the plurality of pressing parts 150 may be performed by rotating the pressing parts 150 gradually at the same level in order instead of completely separating one by one, which may minimize a variation of the compression force applied to the stack 110.

Finally, as illustrated in (c) and (d) of FIG. 6, the worker at the installation site M performs an operation of coupling a plurality of fixing bars 130' to the lower plate 120b while passing through the upper plate 120a and the stack 110 so that the stack 110 is compressed and fixed and removing the pressing jig 20.

Here, the fixing bars 130' for compressing and fixing the stack 110 compresses and fixes the stack 110 with a coupling force at a level corresponding to the compression force applied to the front surface of the stack 110 through the rotation adjustment of the pressing part 150 and the compression spring 140, which are removed in a previous process.

After the fixing bar 130' is coupled as described above, the worker at the installation site M performs an operation of removing the pressing jig 20 seated on the upper plate 120a from the upper plate 120a by using the above-described moving unit 10.

Through the above-described series of operations or processes, the manufacturing and transportation may be performed in a state of firmly maintaining the alignment of the stack 110 based on the elastic force. Thereafter, the solid oxide stack assembly 100 according to the present invention may be fixedly installed safely, quickly, and accurately at the installation site M, and the preprocessing and operation may be consecutively performed with a low cost.

According to the present invention, the upper plate and the lower plate arranged to support the top surface and the bottom surface of the stack formed by repeatedly stacking the unit in which the unit cell and the predetermined laminate are coupled to each other, respectively, the plurality of guide bars arranged at equal distances along the edge of the upper plate and coupled to the lower plate while passing through the upper plate and the stack to guide the alignment and assembly of the stack, the plurality of compressing springs each having one end supported by the upper plate in a state in which the protrusion of the guide bar protruding from the upper plate passes through the compression spring, and the pressing part that is screw-coupled to the protrusion to press the other end of the compression spring, thereby constantly compressing the stack and maintaining the alignment of the stack firmly maintain the alignment of the stack based on the elastic force. Thus, as the stack may be safely transported to the installation site although the stack is assembled in advance at the fuel cell or an electrolyzer cell manufacturing factory, the output degradation of the fuel cell or the electrolyzer cell caused by the misalignment of the stack may be prevented, and the installation and preprocessing of the fuel cell or the electrolyzer cell may be quickly performed at the installation site.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

### [Description of reference numerals]

10: Heavy object moving unit (hoist)
20: Pressing jig that is heavy object
30: Transportation vehicle
M: Installation site
100: Safely transportable solid oxide stack assembly
110: Stack
120a, 120b: Upper plate, Lower plate
122: Support groove
130: Guide bar
132: Protrusion
130': Fixing bar
140: Compression spring
150: Pressing part
152: Accommodation groove
160: Ring part
170: Pressure sensor

## Claims

1. A solid oxide stack assembly that is safely transportable, comprising:
a stack formed by repeatedly stacking a unit in which a unit cell and a predetermined laminate are coupled to each other;
an upper plate and a lower plate arranged to support a top surface and a bottom surface of the stack, respectively;
a plurality of guide bars arranged at equal distances along an edge of the upper plate and coupled to the lower plate while passing through the upper plate and the stack to guide alignment and assembly of the stack;
a plurality of compressing springs each having one end supported by the upper plate in a state in which a protrusion of the guide bar protruding from the upper plate passes through the compression spring; and
a pressing part that is screw-coupled to the protrusion to press the other end of the compression spring, thereby constantly compressing the stack and maintaining the alignment of the stack.

2. The solid oxide stack assembly of claim 1, further comprising a transportation ring part coupled to the upper plate for movement or transportation and detachably coupled to a heavy object moving unit.

3. The solid oxide stack assembly of claim 1, further comprising a plurality of plate-shaped pressure sensors, each of which is disposed at a central portion of the guide bar adjacent thereto while being in contact with a bottom surface of the upper plate and a top surface of the stack to measure a compression force applied from the upper plate to the stack.

4. The solid oxide stack assembly of claim 1, wherein the pressing part comprises an accommodation groove recessed inwardly to surround and accommodate an outer circumferential surface of the other end of the compression spring so that the other end of the compression spring is firmly supported and constantly pressed.

5. The solid oxide stack assembly of claim 4, wherein the upper plate comprises a support groove recessed inwardly to surround and accommodate an outer circumferential surface of the one end of the compression spring so that the one end of the compression spring is firmly supported and constantly pressed.

6. A method for manufacturing the solid oxide stack assembly of claim 1, comprising:
arranging a lower plate on a work surface, and coupling a plurality of guide bars at equal distances along an edge of the lower plate;
forming a stack by repeatedly stacking a unit through which the guide bar passes and which is aligned by the guide bar;
arranging the upper plate through which the guide bar passes to support a top surface of the stack, and installing a compression spring so that one end of the upper plate is supported in a state in which a protrusion of the guide bar protruding from the upper plate passes through the compression spring; and
screw-coupling the pressing part to the protrusion so as to press the other end of the compression spring, thereby constantly compressing the stack and maintaining the alignment of the stack.

7. A method for seating and fixing the solid oxide stack assembly of claim 1 at an installation site, comprising:
seating the solid oxide stack assembly at the installation site by using a heavy object moving unit;
positioning a pressing jig that is a heavy object to an upper plate of the solid oxide stack assembly seated at the installation site by using the moving unit;
separating the pressing part of the solid oxide stack assembly and removing the compression spring and guide bar while a pressing force of the pressing jig is applied; and
compressing and fixing the stack by coupling a fixing bar that passes through the upper plate and the stack to the lower plate, and removing the pressing jig.
